# EUROPÄISCHE PATENTSCHRIFT

(11) **EP 2 733 096 B1**
(45) Veröffentlichungstag und Bekanntmachung des Hinweises auf die Patenterteilung: **01.03.2017**
(21) Anmeldenummer: 13193244.4
(22) Anmeldetag: 18.11.2013
(51) Int. Cl.: B65G 47/14, B65G 47/51

(54) **Vorrichtung zum Puffern von Formteilen in einer Getränkeabfüllanlage**
Device for buffering molded parts in a beverage bottling machine
Dispositif permettant de mettre en tampon des pièces moulées dans une installation de remplissage de boissons

(30) Priorität: 19.11.2012 DE 102012111131
(43) Veröffentlichungstag der Anmeldung: 21.05.2014
(60) Teilanmeldung: 16175807.3
(73) Patentinhaber: Krones AG, 93073 Neutraubling (DE)
(72) Erfinder: Buchhauser, Klaus, 93073 Neutraubling (DE); Klepatz, Sebastian, 93073 Neutraubling (DE); Schönfelder, Markus, 93073 Neutraubling (DE)
(74) Vertreter: Nordmeyer, Philipp Werner

(56) Entgegenhaltungen:
- WO-A1-2007/116155
- DE-A1- 3 644 991
- DE-A1- 10 322 475
- GB-A- 980 963
- JP-Y1- S4 421 537
- US-A- 2 642 173
- US-A- 3 191 749
- US-A- 6 065 587

## Beschreibung

### Technisches Gebiet

Die vorliegende Erfindung betrifft eine Vorrichtung zum Puffern von Formteilen in einer Getränkeabfüllanlage nach dem Oberbegriff des Anspruchs 1 und ein Verfahren zum Puffern von Formteilen in einer Getränkeabfüllanlage nach dem Oberbegriff des Anspruchs 11.

### Stand der Technik

Es ist bekannt, Behälterverschlüsse und insbesondere Verschlusskappen für Behälter in einer Getränkeabfüllanlage mittels unterschiedlicher Transportvorrichtungen dem eigentlichen Verschließer zuzuführen. Hierbei ist es beispielsweise bekannt, die Behälterverschlüsse, beispielsweise Kunststoffschraubverschlüsse zum Verschließen von PET-Flaschen, über Führungsrinnen dem Verschließer zuzuführen. Höhenunterschiede zwischen unterschiedlichen Anlagenkomponenten können beispielsweise mittels Blasförderern, Förderbändern oder Wasserfallförderern überwunden werden.

Da es im Produktionsprozess in einer Getränkeabfüllanlage zu Unterbrechungen kommen kann, werden verschiedene Speichersysteme zwischen dem Sortierwerk, in welchem die jeweiligen Behälterverschlüsse lagerichtig sortiert werden, und dem eigentlichen Verschließer angeordnet. Diese Puffervorrichtungen können beispielsweise durch langgestreckte Rinnensysteme bereitgestellt werden, welche eine entsprechende Vorhaltkapazität für die Behälterverschlüsse aufweisen. Damit werden über Anordnungen, welche lange Transportwege für die lagerichtig vorsortierten Behälterverschlüsse aufweisen, entsprechende Pufferkapazitäten bereitgestellt. Wenn es dann zu einer Störung bei der Zuführung der Behälterverschlüsse zu dem Sortierwerk beziehungsweise einer Störung innerhalb des Sortierwerkes kommt, kann entsprechend der Produktionsprozess in der Getränkeabfüllanlage noch weiter betrieben werden, da eine entsprechend große Anzahl an Behälterverschlüssen noch in der Pufferkapazität eines solchen Systems vorhanden ist.

Der Platzbedarf solcher ausgedehnter Transportwege beziehungsweise langer Rinnensysteme ist jedoch nachteilig. Es sind daher Verschlusspuffer bekannt, welche kompaktere Pufferkapazitäten bereitstellen. Beispielsweise ist aus der DE 41 42 785 A1 eine Vorrichtung zur Verwendung bei einem Verschlussmagazin zum Einführen von Kronkorken oder dergleichen in einen Verschlusskanal bekannt, welche eine im Wesentlichen senkrecht angeordnete Pufferkapazität aufweist. Die entsprechenden Behälterverschlüsse werden über eine Verjüngung am Ausgang an das nachfolgende Rinnensystem geführt. Nachteilig an einem solchen Puffersystem ist, dass der durch die Schwerkraftförderung bedingte Höhenverlust ein erneutes Anheben der Behälterverschlüsse erforderlich macht beziehungsweise von vornherein die Behälterverschlüsse auf eine größere Höhe angehoben werden müssen. Weiterhin nachteilig ist, dass alle Verschlüsse entsprechend mit ihrem Gewicht nach unten drücken, so dass am Ausgang durch den entstehenden Staudruck große Kräfte entstehen können, welche in einer Deformation der Behälterverschlüsse resultieren können. Entsprechend ist der Verschleiß der Behälterverschlüsse aufgrund des hohen Staudrucks in einer solchen Puffervorrichtung, welche über ein Schwerkraftprinzip betrieben wird, bauartbedingt recht hoch.

Auch das in der EP 1 801 066 A2 beschriebene revolverartige Puffersystem verwendet den Höhenunterschied zur Leerung des jeweiligen Revolverschachtes. Zum einen ergibt sich hieraus eine aufwändige Konstruktion des Puffers, wobei der am Ausgang anstehende Staudruck aufgrund der Höhe der übereinander gestapelten Behälterverschlüsse wieder relativ hoch ist, und zum anderen tritt wieder der vorgenannte Höhenverlust auf, welcher entweder vor oder nach dem revolverförmigen Puffersystem überwunden werden muss.

Auch bei den in der DE 698 00 834 T2 und der EP 1 803 681 A2 bekannten Pufferlösungen findet ein Höhenverlust statt, welcher entweder vor oder nach den jeweiligen Puffern überwunden werden muss, um die eigentliche Verarbeitungshöhe im Verschließer zu erreichen.

Die WO 2007/116155 A1 beschreibt eine Vorrichtung zum Puffern von Formteilen nach dem Oberbegriff des Anspruchs 1.

### Darstellung der Erfindung

Ausgehend von dem genannten Stand der Technik ist es entsprechend eine Aufgabe der vorliegenden Erfindung, eine Vorrichtung zum Puffern von Formteilen in einer Getränkeabfüllanlage anzugeben, welche den Verschleiß der Formteile verringert und welche den Anlagenaufbau effizienter gestaltbar macht.

Diese Aufgabe wird durch eine Vorrichtung zum Puffern von Formteilen in einer Getränkeabfüllanlage mit den Merkmalen des Anspruchs 1 und durch ein Verfahren zum Puffern von Formteilen mit den Merkmalen des Anspruchs 11 gelöst. Vorteilhafte Ausgestaltungen ergeben sich aus den Unteransprüchen.

Entsprechend wird eine Vorrichtung zum Puffern von Formteilen in einer Getränkeabfüllanlage, bevorzugt zum Puffern von Behälterverschlüssen in einer Getränkeabfüllanlage, vorgeschlagen, wobei die Vorrichtung einen Zulauf und einen Auslauf aufweist, zwischen denen eine Pufferfläche zum Puffern der Formteile angeordnet ist. Erfindungsgemäß ist die Pufferfläche rotierbar angeordnet. Ferner schließt die Pufferfläche an eine Transportfläche an, die eine direkte Verbindung zwischen dem Zulauf und dem Auslauf bereitstellt, zum Transportieren der Formteile vom Zulauf zum Auslauf dient und unabhängig von der Pufferfläche rotierbar ist. Der Zulauf und der Auslauf sind relativ zueinander auf der gleichen Höhe angeordnet, die Pufferfläche und die Transportfläche sind waagerecht orientiert, wodurch ein Höhenverlust zwischen dem Zulauf der jeweiligen Formteile und dem Auslauf der jeweiligen Formteile vermieden wird.

Durch das Bereitstellen einer rotierbaren Pufferfläche zur Aufnahme der Formteile wird erreicht, dass die individuellen, in dem Puffer aufzunehmenden Formteile unter Zurücklegung eines relativ kurzen Weges auf der Pufferfläche gespeichert werden können. Beim Aufbau des Puffers finden die Formteile zunächst jeweils einen im Wesentlichen freien Abschnitt der Pufferfläche vor, auf welchem sie zwischengespeichert werden können. Während des Puffervorgangs wird bevorzugt die rotierbare Pufferfläche langsam rotiert, so dass ein zwischenzuspeicherndes Formteil auf einem kurzen Verschiebeweg einen Flächenabschnitt auf der rotierbaren Pufferfläche vorfindet, auf welchem es zwischengespeichert werden kann. Durch die Rotation der Pufferfläche wird entsprechend der Weg, welcher von einem zu speichernden Formteil auf der rotierbaren Pufferfläche zurücklegt werden muss, minimiert, da beispielsweise beim Aufschieben des jeweiligen Formteils auf die rotierbare Pufferfläche typischerweise ein Weg bis maximal zur Rotationsachse der rotierbaren Pufferfläche zurückgelegt werden wird.

Gleichzeitig ermöglicht das Zwischenspeichern der Formteile auf der rotierbaren Pufferfläche, dass die entsprechenden Formteile durch Rotation der rotierbaren Pufferfläche und der daraus entstehenden Fliehkräfte auf einfache Weise wieder von der Pufferfläche abgeräumt werden können. Dabei unterstützen die vom Abstand von der Rotationsachse abhängigen unterschiedlichen Umfangsgeschwindigkeiten das Abräumen des Puffers von außen nach innen, so dass ein überhöhter Staudruck nicht auftritt und die Formteile entsprechend verschleißarm abgeräumt werden können.

Die rotierbare Pufferfläche ist waagerecht orientiert, so dass ein Staudruck der einzelnen Formteile gegeneinander, welcher im Stand der Technik durch das Übereinanderstapeln der jeweiligen Formteile entsteht, nicht auftreten kann. Der Verschleiß der Formteile sowie die Gefahr einer Deformation werden entsprechend gering gehalten, wodurch das Risiko von Verklemmungen zwischen den Formteilen im weiteren Bearbeitungsprozess minimiert wird und ein störungsfreier Betrieb gewährleistet ist.

Weiterhin kann durch die waagerechte Anordnung der rotierbaren Pufferfläche ein Höhenverlust zwischen dem Zulauf der jeweiligen Formteile und dem Auslauf der jeweiligen Formteile vermieden werden. Dadurch kann die Energie, welche für die Förderung der jeweiligen Formteile aufgewendet werden muss, auf dem notwendigen Minimum gehalten werden, da auf die Überwindung zusätzlicher Höhenunterschiede, welche durch die Ausbildung der Puffervorrichtungen des Standes der Technik bedingt waren, verzichtet werden kann.

Die Pufferfläche ist bevorzugt durch eine Pufferscheibe ausgebildet, welche waagerecht angeordnet ist und welche um eine Rotationsachse herum rotierbar ist. Durch die Pufferscheibe wird eine rotationssymmetrische Pufferfläche bereitgestellt, welche entsprechend eine sanfte Handhabung der Formteile ermöglicht, da der Übergang der jeweiligen Formteile von dem Zulauf auf die Pufferscheibe, beziehungsweise von der Pufferscheibe zu dem Auslauf sanft vor sich gehen kann.

In einer alternativen Ausführungsform können die gleichen Vorteile auch mit einer Pufferfläche erreicht werden, welche als rotierbarer Pufferring ausgebildet ist. Der Pufferring weist dann bevorzugt eine Begrenzung für die Formteile auf, um ein Herabfallen von Formteilen von dem Pufferring zu vermeiden. Durch die Verwendung eines Pufferrings lässt sich im Zentrum der Vorrichtung eine Wartungsöffnung ausbilden, durch welche hindurch ein Zugang zu der Pufferfläche auch bei einem beengten Einbau der Vorrichtung in einer Getränkeabfüllanlage erreicht werden kann. Mit anderen Worten kann ein Bediener oder Wartungspersonal von unten her durch die Wartungsöffnung des Pufferrings hindurchreichen oder - je nach Dimensionierung - auch hindurch steigen, um Wartungsarbeiten, die Behebung einer Störung oder andere Arbeiten auch an der jeweiligen Oberseite der Pufferflächen durchführen zu können.

Die Pufferfläche, bevorzugt die Pufferscheibe oder der Pufferring, schließt an die Transportfläche zum Transportieren der Formteile vom Zulauf zum Auslauf an und ist besonders bevorzugt von einer solchen Transportfläche umgeben. Der Transport der Formteile über die Transportfläche findet bevorzugt pufferfrei, also in Form eines Bypass, statt. Mit anderen Worten werden die Formteile in einer bevorzugen Weiterbildung durch die Transportfläche vom Zulauf übernommen und dann auf der Transportfläche direkt zum Auslauf transportiert, ohne dass die Formteile mit der Pufferfläche in signifikanten Kontakt kommen.

Die Transportfläche ist in einer besonders bevorzugten Weiterbildung als ringförmiger Transportring vorgesehen und umgibt besonders bevorzugt eine kreisförmige Pufferscheibe oder einen ringförmigen Pufferring. Entsprechend sind der Transportring und die Pufferscheibe oder der Pufferring bevorzugt konzentrisch bezüglich der Rotationsachse der rotierbaren Pufferfläche angeordnet und der Transportring liegt außerhalb der Pufferscheibe oder des Pufferrings. Auf diese Weise kann im Gleichgewichtsbetrieb, in welchem eine Pufferleistung für die Formteile nicht notwendig ist, ein direkter, pufferfreier Transport zwischen dem Zulauf und dem Auslauf erreicht werden. Dabei werden die Formteile so entlang des Transportringes beziehungsweise entlang der Transportfläche geführt, dass sie auf die im Zentrum angeordnete Pufferfläche nicht aufgeschoben werden. Die Transportfläche kann auch als Ringabschnitt oder in jeglicher anderen Geometrie ausgebildet sein, welche anschließend an einen Bereich der Pufferfläche angeordnet sein kann.

In einer besonders bevorzugten Weiterbildung ist die Transportfläche als Transportring so ausgebildet, dass er in Transportrichtung rotiert. Entsprechend wird im Gleichgewichtsbetrieb ein Formteil vom Zulauf auf den Transportring aufgeschoben, dann auf dem Transportring schonend und reibungsarm zum Auslauf transportiert, und dann dem Auslauf übergeben. Entsprechend kann im Gleichgewichtsbetrieb ein sehr verschleißarmer Transport der Formteile erreicht werden.

Wenn eine Störung auftritt, beispielsweise am Auslauf, wird zunächst der Transportring durch weiteres Aufschieben von Formteilen zwischen dem Zulauf und dem Auslauf vollständig aufgefüllt. Wenn der Transportring dann vollständig aufgefüllt ist, werden die weiter über den Zulauf nachgeförderten Formteile entsprechend auf die innerhalb des Transportrings angeordnete Pufferfläche verdrängt und bauen einen Puffer auf der Pufferfläche auf.

Durch eine langsame Rotation der rotierbaren Pufferfläche kann dabei ein materialschonendes Aufschieben der einzelnen Formteile erreicht werden, da die jeweils zurückzulegenden Verschiebewege auf der Pufferfläche kurz gehalten werden, so dass eine verschleißarme Handhabung der jeweiligen Formteile erreicht wird. Wenn die Störung am Auslauf dann wieder behoben ist und wieder Bedarf an Formteilen vorliegt, werden zunächst die Formteile, welche sich auf der Transportfläche, beispielsweise dem Transportring, befinden, dem Auslauf zugeführt. Dann werden nach und nach die sich auf der Pufferfläche befindenden Formteile durch eine erhöhte Rotation der rotierbaren Pufferfläche nach außen gedrängt und entsprechend aufgrund der wirkenden Fliehkräfte auf den Transportring aufgeschleust. Dies kann stattfinden, bis der gesamte, auf der Pufferscheibe aufgenommene Puffervorrat wieder abgeräumt ist.

In einer Variante kann, beispielsweise vor Produktionsbeginn, zunächst der Zulauf mit einer höheren Förderkapazität betrieben werden, als am Auslauf gefordert, so dass ein Puffer, so wie vorher beschrieben, auf der Pufferfläche aufgebaut wird. Danach kann der Zulauf entsprechend gedrosselt werden, und, im Falle einer Unterbrechung des Zulaufs, der auf der Pufferscheibe akkumulierte Puffer abgeräumt werden, um eine unterbrechungsfreie Produktion sicherzustellen.

Die Transportfläche, insbesondere der Transportring, ist unabhängig von der Pufferfläche rotierbar. Hierdurch kann die Transportleistung im Gleichgewichtsbetrieb so eingestellt werden, dass die Formteile vom Zulauf zum Auslauf transportiert werden, ohne dass ein Puffer aufgebaut oder abgebaut wird. Die Formteile werden dabei besonders bevorzugt so geführt, dass sie einander nicht berühren, so dass sich über die beschriebene Transportfläche ein entsprechend verschleißarmer Transport ergibt. Die unabhängige Steuerung der Rotation der Pufferfläche, welche von der Transportfläche umgeben ist, ermöglicht entsprechend ein verschleißarmes Auffahren der Formteile und entsprechend ein verschleißarmes Abräumen der Pufferfläche, wenn die Pufferkapazität verwendet werden soll.

In einer weiteren bevorzugten Weiterbildung sind mindestens zwei Zuläufe vorgesehen und/oder mindestens ein Zulauf ist mehrspurig ausgebildet, so dass der Zulauf von mindestens zwei Formteilen gleichzeitig auf die Transportfläche und/oder die Pufferfläche möglich ist, oder aber eine Mehrzahl von Formteilen gleichzeitig in die Vorrichtung eingebracht werden, wobei beispielsweise jeweils nur eines auf der Transportfläche aufgebracht wird und die übrigen auf die Pufferfläche verdrängt werden. Es können über die mindestens zwei Zuläufe auch Formteile von unterschiedlichen Vorstationen der Getränkeabfüllanlage übernommen werden.

In einer weiteren bevorzugten Weiterbildung sind mindestens zwei Abläufe und/oder mindestens ein mehrspuriger Auslauf vorgesehen, um beispielsweise mehrere Abnehmer zur weiteren Bearbeitung der Formteile zu bedienen.

In einer weiteren bevorzugten Ausführungsform sind mindestens zwei übereinander angeordnete Pufferflächen vorgesehen, wobei eine mit einem Zulauf und eine andere mit einem Auslauf verbunden sind. Die Pufferflächen sind dabei bevorzugt über Verbindungsflächen, beispielsweise Rutschen, miteinander verbunden. Auf diese Weise können Formteile die übereinander angeordneten Pufferflächen vom Zulauf zum Auslauf hin nacheinander durchlaufen, so dass eine entsprechend vergrößerte Gesamtpufferfläche bereitgestellt wird.

In einer weiteren bevorzugten Ausführungsform ist oberhalb der Pufferfläche eine Führungsfläche so beabstandet angeordnet, dass die Formteile zwischen der Pufferfläche und der Führungsfläche lagerichtig führbar sind. Diese Führungsfläche kann stillstehend ausgebildet sein oder gemeinsam mit der Pufferfläche rotieren. Durch die Führungsfläche wird vermieden, dass die schon ausgerichteten und richtig orientiert zugeführten Formteile wieder in eine falsche Ausrichtung gebracht werden. Entsprechend ist bevorzugt ein Abstand zwischen der Pufferfläche und der Führungsfläche auf eine geometrische Abmessung der Formteile hin ausgelegt.

Um die Kapazität der vorgeschlagenen Vorrichtung zum Puffern zu erhöhen, ist bevorzugt mindestens eine zweite Pufferfläche vorgesehen, welche über der ersten Pufferfläche angeordnet ist. Entsprechend kann durch ein Anheben der Pufferflächen entweder die eine Pufferfläche oder die andere Pufferfläche selektiv dem Strom an Formteilen ausgesetzt werden beziehungsweise es können Formteile von diesen Pufferflächen nacheinander ausgegeben werden.

Um unterschiedlich dimensionierte Formteile auf den übereinander angeordneten Pufferflächen aufnehmen zu können und gleichzeitig einen möglichst geringen Volumenbedarf der Gesamtvorrichtung zu erreichen, kann der senkrechte Abstand zwischen den Pufferflächen auf die jeweilige Höhe des Formteils eingestellt werden. Beispielsweise kann bei einer Verarbeitung von hohen Kunststoffschraubverschlüssen ein entsprechender Abstand zwischen den beiden Pufferflächen eingestellt werden, und bei der Verarbeitung von flachen Kunststoffschraubverschlüssen entsprechend ein niedrigerer Abstand gewählt werden, so dass die gesamte Höhe des Pufferturmes begrenzt bleibt. Dadurch kann wenigstens die Unterseite eines die Pufferfläche ausbildenden Bauteils, beispielsweise einer Pufferscheibe oder eines Pufferrings, als Führungsfläche für eine darunter angeordnete zweite Pufferfläche dienen. Eine Einstellung des Abstandes kann auch zwischen einer Führungsfläche und einer Pufferfläche vorgenommen werden. Die oben genannte Aufgabe wird weiterhin auch durch ein Verfahren mit den Merkmalen des Anspruchs 11 gelöst. Vorteilhafte Weiterbildungen ergeben sich aus dem Unteranspruch.

### Kurze Beschreibung der Figuren

- Figur 1: eine schematische perspektivische Darstellung einer Vorrichtung zum Puffern von Formteilen in einer Getränkeabfüllanlage in einem ersten Ausführungsbeispiel;
- Figur 2: eine Draufsicht auf die in Figur 1 gezeigte Vorrichtung;
- Figur 3: eine schematische Seitenansicht auf eine Vorrichtung zum Puffern von Formteilen in einem zweiten Ausführungsbeispiel, welche mehrere Pufferflächen umfasst;
- Figur 4: eine Detailansicht aus dem in Figur 3 gezeigten Ausführungsbeispiel;
- Figur 5: eine schematische Seitenansicht einer Vorrichtung zum Puffern von Formteilen in einem weiteren Ausführungsbeispiel mit drei übereinander angeordneten, über Verbindungsflächen miteinander verbundenen Pufferflächen;
- Figur 6: eine schematische Seitenansicht einer Vorrichtung zum Puffern von Formteilen in einem weiteren Ausführungsbeispiel mit separaten Führungsflächen;
- Figur 7: eine schematische perspektivische Darstellung einer Vorrichtung zum Puffern von Formteilen mit mehreren Zuläufen;
- Figur 8: eine schematische perspektivische Darstellung einer Vorrichtung zum Puffern von Formteilen mit zwei Abläufen;
- Figur 9: eine schematische perspektivische Darstellung einer Vorrichtung zum Puffern mit einem auf die Pufferfläche mündenden Zulauf; und
- Figur 10: eine schematische perspektivische Ansicht einer Vorrichtung zum Puffern in einem weiteren Ausführungsbeispiel, welches eine zentrale Wartungsöffnung in einer Pufferfläche umfasst.

### Detaillierte Beschreibung bevorzugter Ausführungsbeispiele

Die erfindungsgemäße Vorrichtung zum Puffern von Formteilen wird durch die Ansprüche des Anspruchs 1 und das erfindungsgemäße Verfahren zum Puffern von Formteilen durch die Merkmale des Anspruchs 11 definiert. Weitere Ausführungsformen der Erfindung ergeben sich aus den abhängigen Ansprüchen.

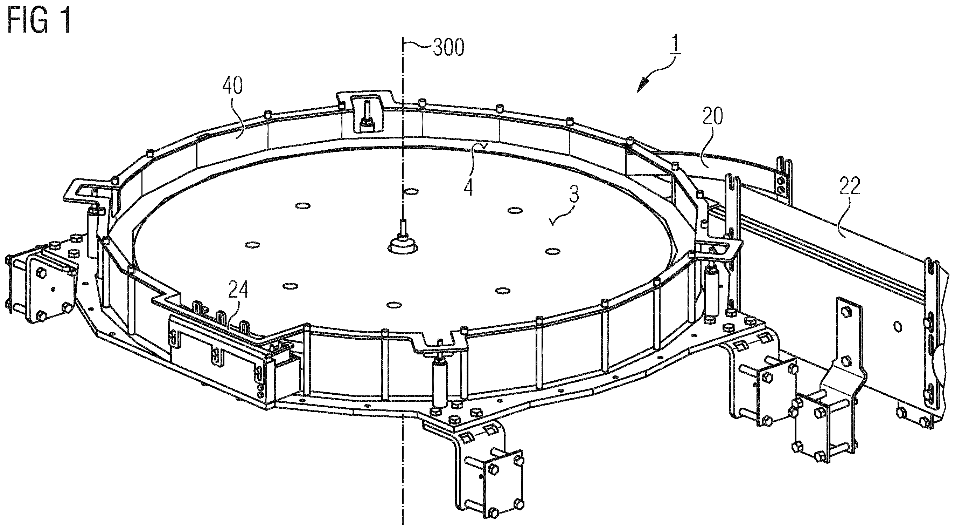

Figur 1 zeigt eine Vorrichtung 1 zum Puffern von in dieser Figur nicht gezeigten Formteilen in einer Getränkeabfüllanlage. Die Vorrichtung 1 wird bevorzugt zum Puffern von Behälterverschlüssen, beispielsweise von auf PET-Flaschen aufschraubbaren Kunststoffschraubverschlüssen, in einer Getränkeabfüllanlage eingesetzt.

Die Vorrichtung 1 zum Puffern umfasst einen Zulauf 20, mittels welchem die Formteile, welche über ein Transportband 22 bereitgestellt werden, zugeführt werden. Ein Auslauf 24 ist ebenfalls vorgesehen, mittels welchem die Formteile wieder aus der Vorrichtung 1 ausgeschleust werden können, um sie dann nachfolgenden Bearbeitungsschritten zur Verfügung zu stellen. Üblicherweise werden Formteile beispielsweise in Form von Behälterverschlüssen dem Zulauf 20 über das Transportband 22 von einem Sortierwerk aus zugeführt, welches beispielsweise für eine einwandfreie und einheitliche Qualität der zugeführten Formteile sorgt, sowie eine einheitliche Ausrichtung der Formteile sicher stellt.

Der Auslauf 24 mündet typischerweise in eine weitere Transportvorrichtung, beispielsweise in eine Transportrinne oder auf ein Transportband, mittels welchem die aus der Vorrichtung 1 ausgeschleusten Formteile einem weiteren Bearbeitungsschritt zugeführt werden. Beispielsweise können Behälterverschlüsse auf diese Weise einem Verschließer zugeführt werden, welcher die Behälterverschlüsse dann auf zu verschließende Behälter aufbringt. Ein typischer, nachgeschalteter Verschließer umfasst Verschließköpfe, mittels welchen Kunststoffschraubverschlüsse auf die entsprechenden Gewinde an den Mündungen von PET-Flaschen aufgeschraubt werden können.

Die Vorrichtung 1 zum Puffern der Formteile umfasst zwischen dem Zulauf 20 und dem Auslauf 24 eine rotierbare Pufferfläche 3, welche in dem in Figur 1 gezeigten Ausführungsbeispiel als rotierbare Pufferscheibe ausgebildet ist, die um eine Rotationsachse 300 rotierbar ist. Die rotierbare Pufferfläche 3 wird dabei über einen nicht gezeigten Antrieb, beispielsweise einen Elektromotor mit einem angepassten Getriebe, in Rotation versetzt.

Die rotierbare Pufferfläche 3 dient zum Puffern der über den Zulauf 20 zufließenden Formteile, wobei durch die Rotation der rotierbaren Pufferfläche 3 von vornherein eine gleichmäßige Verteilung der Formteile auf der Pufferfläche 3 erreicht werden kann, ohne dass die Formteile einem erhöhten Staudruck ausgesetzt wären. Weiterhin kann durch die Rotation der rotierbaren Pufferfläche 3 erreicht werden, dass die einzelnen Formteile beim Aufbau des Puffers sowie beim Abbau des Puffers nur relativ kurze Verschiebewege auf der Pufferfläche 3 zurücklegen müssen. Durch die Reduktion der Verschiebewege auf der Pufferfläche 3 wird eine Reduktion des Verschleißes der Formteile erreicht.

Insbesondere ermöglicht es die Rotierbarkeit der Pufferfläche 3, dass mittels des Zulaufs 20 zugeführte Formteile zunächst stets einen freien Bereich auf der Pufferfläche 3 vorfinden, auf welchen sie aufgeschoben werden können. Wenn sich die Pufferfläche 3 während des Aufbauens des Puffers nach und nach mit Formteilen füllt, so wird durch die Rotation der Pufferfläche immer noch ein möglichst kurzer Weg für die individuellen Formteile auf der Pufferfläche 3 gefunden. Die dabei maximal zurückzulegende Wegstrecke entspricht im Wesentlichen in etwa dem Radius der Pufferscheibe.

Wenn die Pufferfläche 3 beim Aufbau des Puffers vollständig mit Formteilen gefüllt ist, so muss der Zufluss an neuen Formteilen über den Zulauf 20 gestoppt werden, zumindest wenn keine gleichzeitige Abnahme an Formteilen über den Auslauf 24 stattfindet. Der Füllzustand der Pufferfläche 3 wird über einen hier nicht gezeigten Sensor überwacht.

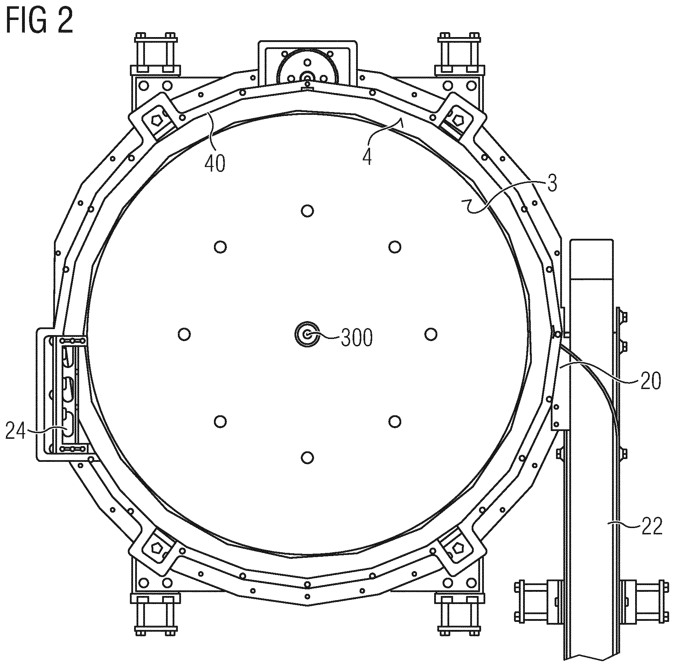

In dem in den Figuren 1 und 2 gezeigten Ausführungsbeispiel ist weiterhin eine Transportfläche 4 vorgesehen, welche die Pufferfläche 3 umgibt. In dem gezeigten Ausführungsbeispiel ist die Transportfläche 4 als Transportring ausgebildet. Die Transportfläche 4 schließt auf ihrer Innenseite direkt an die Pufferscheibe 3 an und grenzt an ihrer Außenseite an eine Außenwand 40, welche ein Herabrutschen der Formteile nach außen von der Transportfläche 4 verhindert. Die Außenwand 40 dient entsprechend auch zur Führung der Formteile.

Im Gleichgewichtsbetrieb, bei welchem der Puffer auf der Pufferfläche 3 unverändert bleibt, also weder auf- noch abgebaut wird, werden die Formteile über das Transportband 22 am Zulauf 20 zur Verfügung gestellt, und werden dann entlang der Transportfläche 4 zum Auslauf 24 gefördert. Die Transportfläche 4 kann dabei entweder stationär ausgebildet sein, oder aber sie kann - wie die Pufferfläche 3 - rotierbar sein.

Im Falle einer stationären Transportfläche 4 findet der Transport der Formteile vom Zulauf 20 zum Auslauf 24 aufgrund des über die vom Zulauf 20 zugeführten Formteile aufgebauten geringen Staudrucks statt, wobei die Formteile dann entlang der Außenwand 40 zum Auslauf 24 gedrängt werden.

In einer bevorzugten Variante wird die Transportfläche 4 jedoch - bevorzugt mit Maschinengeschwindigkeit - so rotiert, dass die über den Zulauf 20 zugeführten Formteile von der Transportfläche 4 unmittelbar abtransportiert werden und dann direkt dem Auslauf 24 zugeführt werden. Durch den unmittelbaren Abtransport der Formteile vom Zulauf 20 ergibt sich kein Staudruck und die Formteile gleiten auch kaum oder gar nicht auf der Transportoberfläche 4, so dass eine sehr schonende und verschleißarme Handhabung der Formteile erreicht wird.

Am Auslauf 24 werden die Formteile dann ebenfalls unmittelbar abgenommen, so dass sich auch hier kein Staudruck aufbaut und entsprechend auch hier eine verschleißarme und schonende Handhabung der Formteile resultiert. Diese Betriebsweise mit einer auf Maschinengeschwindigkeit rotierenden Transportfläche 4 hat weiterhin den Vorteil, dass die einzelnen Formteile auf der Transportfläche 4 nicht aneinander anstoßen, sondern vom Zulauf 20 über die Transportfläche 4 direkt abgefördert werden. Entsprechend findet im Gleichgewichtsbetrieb, bei welchem der Puffer an Formteilen auf der Pufferfläche 3 unberührt bleibt, ein sehr schonendes und verschleißarmes Fördern der Formteile statt.

Der Mechanismus des Aufbauens eines Puffers an Formteilen auf der Pufferfläche 3 wurde bereits oben beschrieben. Hierbei sind im Wesentlichen zwei Szenarien denkbar. Zum einen kann auf der Seite des Auslaufs 24 eine Störung auftreten, so dass die Formteile über den Auslauf 24 nicht mehr, oder nicht mehr in dem erforderlichen Umfang, abgenommen werden. Es bildet sich entsprechend ein Rückstau auf der Transportfläche 4 aus, welcher dazu führt, dass die nachfolgend über den Zulauf 20 zugeführten Formteile auf die Pufferfläche 3 abgedrängt werden. Entsprechend baut sich in diesem Falle ein Puffer an Formteilen auf der Pufferfläche 3 auf.

Die Pufferfläche 3 wird während dieses Aufbaus des Puffers bevorzugt langsam rotiert. Durch die langsame Rotation der Pufferfläche 3 wird die Pufferfläche 3 relativ gleichmäßig mit den über den Zulauf 20 weiter zugeführten Formteilen belegt und die einzelnen Verschiebewege der Formteile auf der Pufferfläche 3 sind begrenzt, so dass ein verschleißarmer Aufbau des Puffers erreicht werden kann. Dieser Vorgang des Aufbauens des Puffers auf der Pufferfläche 3 wird erst dann gestoppt, wenn über einen hier nicht dargestellten Sensor festgestellt wird, dass die Pufferfläche 3 im Wesentlichen vollständig mit Formteilen belegt ist.

Zum anderen kann zum gezielten Aufbau eines Puffers an Formteilen auf der Pufferfläche 3 die Zufuhr an Formteilen über den Zulauf 20 mit einer höheren Kapazität bereitgestellt werden, als über den Auslauf 24 wieder abgeführt werden. Entsprechend baut sich auf die eben beschriebene Weise wieder ein Rückstau der Formteile auf der Transportfläche 4 auf, welcher schlussendlich wieder zu einem teilweisen Verdrängen der nachfolgend über den Zulauf 20 bereit gestellten Formteile auf die Pufferfläche 3 führt. Auf diese Weise wird entsprechend ein Puffer an Formteilen auf der rotierbaren Pufferfläche 3 aufgebaut.

Die Pufferfläche 3 und die Transportfläche 4 sind bevorzugt so über getrennte Antriebe antreibbar, dass sie unabhängig voneinander und mit unterschiedlichen Geschwindigkeiten rotieren können. Beispielsweise ist es im Gleichgewichtsbetrieb vorgesehen, dass die Transportfläche 4 mit Maschinengeschwindigkeit rotiert, die Pufferfläche 3 aber nur langsam oder aber überhaupt nicht rotiert, da ein Aufbau oder Abbau des Puffers auf der Pufferfläche 3 nicht stattfindet.

Weiterhin ist es beim gezielten Aufbau eines Puffers an Formteilen auf der Pufferfläche 3 denkbar, die Transportfläche 4 nur langsam zu rotieren oder gar anzuhalten, und gleichzeitig die Pufferfläche 3 langsam zu rotieren, so dass entsprechend die vom Zulauf 20 bereit gestellten Formteile in möglichst freie Bereiche der Pufferfläche 3 geschoben werden. Hierdurch wird ein möglichst verschleißarmes Aufbringen der Formteile auf die Pufferfläche 3 erreicht.

Bei einem gewünschten Abbau des Puffers wird die Pufferfläche 3 mit einer höheren Geschwindigkeit rotiert, um über die auf die jeweiligen Formteile wirkenden Zentrifugalkräfte ein langsames Abräumen der Formteile von der Pufferfläche 3 von außen nach innen zu erreichen. Durch die wirkenden Zentrifugalkräfte werden die Formteile nach außen gedrängt und erreichen entsprechend die Transportfläche 4. Die Transportfläche 4 wird dann entweder langsam oder mit Maschinengeschwindigkeit rotiert, um die Formteile dann dem Auslauf 24 und damit der nächsten Behandlungsstufe zuzuführen.

Über die genannte unabhängige Antreibbarkeit der Pufferfläche 3 und der Transportfläche 4 kann flexibel ein Puffer auf- und abgebaut werden beziehungsweise im Gleichgewichtsbetrieb der Puffer unangetastet bleiben, wobei der auf die Formteile aufgebrachte Verschleiß minimiert wird.

Wie sich beispielsweise aus Figur 1 ergibt, sind der Zulauf 20 und der Auslauf 24 relativ zueinander auf der gleichen Höhe angeordnet und die Pufferfläche 3 ist waagerecht orientiert. Auch die die Pufferfläche 3 umgebende Transportfläche 4 ist waagerecht orientiert. Durch diese waagerechte Orientierung der Pufferfläche 3, der Transportfläche 4 sowie des Zulaufes 20 und des Auslaufes 24 kann erreicht werden, dass eine Pufferung stattfindet, ohne dass davor oder danach ein zusätzlicher Höhenunterschied überwunden werden müsste, welcher wiederum einen zusätzlichen Energiebedarf nach sich ziehen würde. Weiterhin lässt sich auf diese Weise die Bauhöhe der Vorrichtung 1 im Kontext mit den übrigen Anlagenkomponenten, also beispielsweise einem Verschließer in einer Getränkeabfüllanlage, optimieren.

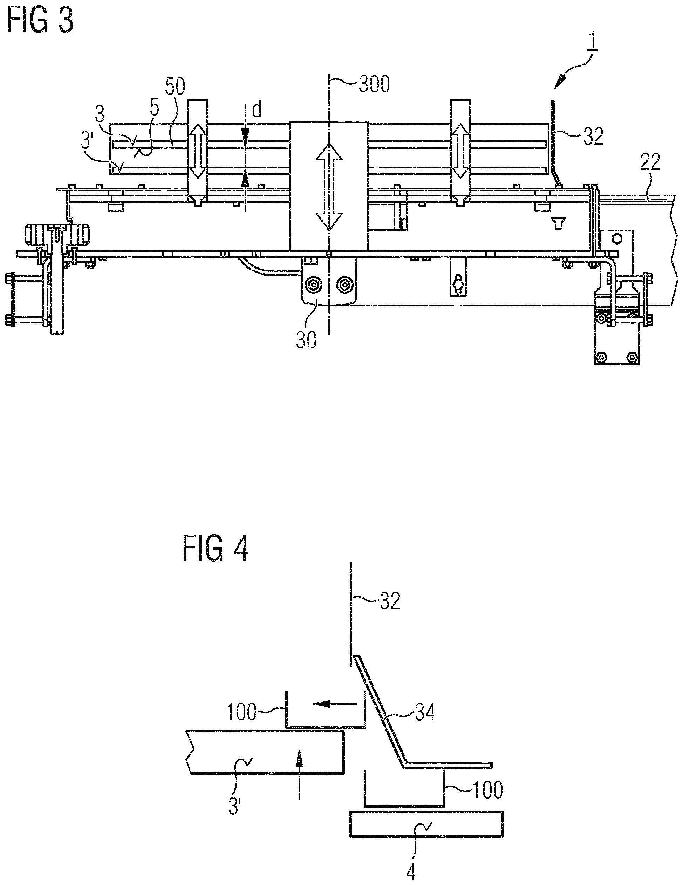

In den Figuren 3 und 4 ist eine besonders bevorzugte Weiterbildung der Vorrichtung 1 gezeigt, bei welcher zwei senkrecht übereinander angeordnete Pufferflächen 3 und 3' vorgesehen sind, welche über einen gemeinsamen Antrieb 30 rotierbar sind. Insbesondere sind die beiden Pufferflächen 3, 3' mit einer gemeinsamen Welle des Antriebes 30 verbunden.

Um das Puffervolumen der Pufferscheibe 3 zu verdoppeln beziehungsweise zu vervielfachen, sind entsprechend die beiden übereinander angeordneten Pufferflächen 3, 3' vorgesehen, welche jeweils zur Aufnahme von Formteilen geeignet sind. Es können beliebig viele solcher Pufferflächen 3, 3' übereinander angeordnet werden, um die entsprechend notwendigen Kapazitäten bereit zu stellen.

Die Pufferflächen 3, 3' können sich abwechselnd auf die Ebene der Transportfläche 4 bewegen, so dass in einem ersten Zustand, in welchem der Puffer befüllt werden soll, zunächst die erste Pufferfläche 3 auf Höhe der Transportfläche 4 angeordnet ist, um ein Zuführen von Formteilen auf die erste Pufferfläche 3 zu ermöglichen. Wenn dann über einen Sensor festgestellt wird, dass die erste Pufferfläche 3 vollständig gefüllt ist, wird diese erste Pufferfläche 3 angehoben und die zweite Pufferfläche 3' wird auf die Höhe der Transportfläche 4 angehoben. Dann kann auch die zweite Pufferfläche 3' mit Formteilen bestückt werden. Entsprechend kann auf die in den Figuren 3 und 4 gezeigte Weise die Pufferkapazität verdoppelt werden. Eine beliebige Anzahl an Pufferflächen 3, 3' kann übereinander angeordnet werden, um die Pufferkapazität in dieser kompakten Ausbildung entsprechend zu vervielfachen.

In Figur 4 ist schematisch eine Darstellung einer Seitenwand 32 mit einem Abweisbereich 34 gezeigt, welcher dazu dient, eventuell über den Rand der Pufferfläche 3' herausstehende Formteile 100, welche hier durch schematisch angedeutete Behälterverschlüsse gezeigt sind, auf die Pufferfläche 3' zu schieben, um ein problemloses Anheben beziehungsweise Absenken der Pufferflächen 3, 3' zu ermöglichen. Der Abweisbereich 34 ist konisch ausgebildet, so dass die Formteile 100 entsprechend nach innen gedrängt werden.

Um weiterhin ein besonders effektives Puffern von Formteilen zu ermöglichen, kann auch der Höhenabstand d zwischen den Pufferflächen 3, 3', welche hier wiederum als Pufferscheiben ausgebildet sind, so eingestellt werden, dass die entsprechenden Formteile zwischen den einzelnen Pufferflächen 3, 3' Platz haben. Damit kann beispielsweise ein flacher Behälterverschluss zwischen Pufferflächen 3, 3' aufgenommen werden, welche in einem geringeren Abstand d voneinander beabstandet sind, wohingegen größer dimensionierte Behälterverschlüsse einen größeren Abstand d erfordern. Auch auf diese Weise kann ein besonders effizienter, flexibler und kompakter Puffervorgang bereitgestellt werden.

In einer nicht gezeigten Weiterbildung wird der Zulauf nicht, wie in Figuren 1 und 2 gezeigt, von der Seite her erledigt, so dass die Formteile direkt auf der Transportfläche 4 aufgeschoben werden, sondern der Zulauf mündet direkt auf die Pufferfläche 3. Damit werden sämtliche Formteile über die Pufferfläche 3 geführt. Bei einer solchen Ausführung ist es jedoch notwendig, dass die Pufferfläche mit einer hinreichend hohen Geschwindigkeit rotiert, welche eine Fliehkraft bedingte Auswärtsbewegung der Formteile in Richtung der Transportfläche 4 ermöglicht, um ein Zufördern der Formteile zu dem Auslauf 24 zu unterstützen.

In einer weiteren bevorzugten Weiterbildung wird über den Zulauf 20 nicht nur ein Formteil pro Zeiteinheit, sondern mindestens zwei, bevorzugt mehrere, Formteile parallel in die Vorrichtung 1 eingebracht. Dabei kann die Zuführung so gestaltet sein, dass sämtliche Formteile gleichzeitig auf die Pufferfläche 3 aufgebracht werden. In einer Weiterbildung ist es möglich, die Formteile parallel zueinander so zuzuführen, dass jeweils eines auf die Transportfläche 4 gelangt, und die anderen parallel dazu auf die Pufferfläche 3 geführt werden.

Selbstverständlich ist es auch denkbar, dass auf der Transportfläche 4 mindestens zwei Formteile parallel zueinander geführt werden, welche dann am Auslauf 24 ebenfalls parallel zueinander abgenommen werden.

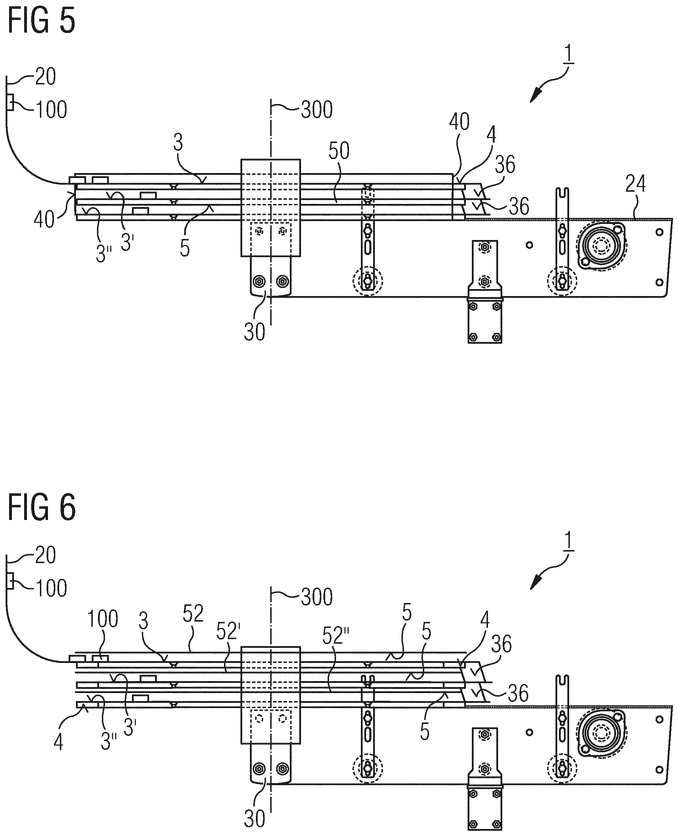

In Figur 5 ist schematisch eine Seitenansicht einer Vorrichtung 1 zum Puffern von Formteilen 100 gezeigt, bei welcher drei rotierbare Pufferflächen 3, 3', 3" übereinander angeordnet sind. An die rotierbaren Pufferflächen 3, 3', 3" schließt sich jeweils eine Transportfläche 4 an. Die Pufferflächen 3, 3', 3" sind über Verbindungsflächen 36 miteinander verbunden, so dass Formteile 100 von der obersten Pufferfläche 3, auf die darunter liegende Pufferfläche 3' und dann auf die unter dieser liegende Pufferfläche 3" gelangen können. Die Verbindungsflächen 36 sind im Bereich der Transportflächen 4 angeordnet, können aber in einer nicht gezeigten Ausführungsform auch in anderen Bereichen an die Pufferflächen 3, 3', 3" anschließen, beispielsweise in einem Innenbereich der Pufferflächen. Die Verbindungsflächen 36 sind hier als Rutschen ausgebildet, können aber über jede geeignete Fördervorrichtung ausgebildet sein.

Der Zulauf 20 mündet in dem gezeigten Ausführungsbeispiel in die oberste Pufferfläche 3 ein und der Auslauf 24 findet von der untersten Pufferfläche 3" aus statt. Mit anderen Worten durchläuft ein Formteil 100 vom Zulauf 20 aus zunächst die obere Pufferfläche 3, wird dann auf die mittlere Pufferfläche 3' verdrängt und von dieser auf die untere Pufferfläche 3" verdrängt, von wo aus das Formteil 100 dann über den Auslauf 24 wieder aus der Vorrichtung 1 ausgeschleust wird. Auf diese Weise kann die Pufferkapazität um einen Faktor entsprechend der Anzahl der übereinander angeordneten Pufferflächen 3, 3', 3" vergrößert werden.

In dem gezeigten Ausführungsbeispiel dienen die Unterseiten der die Pufferflächen 3, 3' ausbildenden Bauteile 50, die hier in Form von Pufferscheiben ausgebildet sind, auch als Führungsflächen 5 für die Formteile 100. Der Abstand zwischen der jeweiligen Pufferfläche 3', 3" zu der darüber angeordneten Führungsfläche 5 ist so gewählt, dass die zwischen der Pufferfläche und der Führungsfläche aufgenommenen Formteile 100 ihre Orientierung beibehalten. So kann beispielsweise vermieden werden, dass in der korrekten Orientierung zugeführte Formteile 100 in Form von Behälterverschlüssen durch die Rotation der Pufferflächen 3', 3" umgeworfen werden. Entsprechend haben die Formteile 100 am Auslauf 24 weiterhin die korrekte Orientierung, so dass sie problemlos weiterverarbeitet werden können. In dem gezeigten Ausführungsbeispiel, in welchem die Unterseiten der die Pufferfläche ausbildenden Bauteile 50 die Führungsflächen 5 ausbilden, rotieren die Führungsflächen 5 mit den Pufferflächen mit, so dass die Reibung zwischen den Formteilen 100 und den jeweiligen Puffer- und Führungsflächen gering gehalten werden kann.

Figur 6 zeigt ein weiteres Ausführungsbeispiel mit drei übereinander angeordneten Pufferflächen 3, 3', 3" in einer ähnlichen Anordnung wie in Figur 5. Neben der Verbindung der Pufferflächen 3, 3', 3" über Verbindungsflächen 36 sind hier über jeder Pufferfläche 3, 3', 3" Führungsflächen 5 angeordnet, welche durch entsprechende Führungsscheiben 52, 52', 52" ausgebildet werden. Die Führungsscheiben 52, 52', 52" rotieren in dem gezeigten Ausführungsbeispiel mit den Pufferflächen 3, 3', 3" mit. In einer nicht gezeigten Alternative kann aber mindestens eine Führungsscheibe 52, 52', 52" auch fest stehen und entsprechend nicht mitrotieren.

Der Abstand zwischen der jeweiligen Pufferfläche 3, 3', 3" und der darüber angeordneten, durch die Führungsscheibe 52, 52', 52" ausgebildeten Führungsfläche 5 ist so gewählt, dass er einer entsprechenden Dimension des Formteils entspricht. Das Formteil 100 wird damit zwischen Pufferfläche und Führungsfläche geführt, so dass es seine korrekte Orientierung beim Durchlaufen der Vorrichtung 1 beibehält.

In einer besonders bevorzugten Weiterbildung ist der Abstand zwischen der jeweiligen Pufferfläche 3, 3', 3" und der zugeordneten Führungsfläche 52, 52', 52" einstellbar, um die Vorrichtung 1 an unterschiedliche Geometrien der Formteile 100 anpassen zu können.

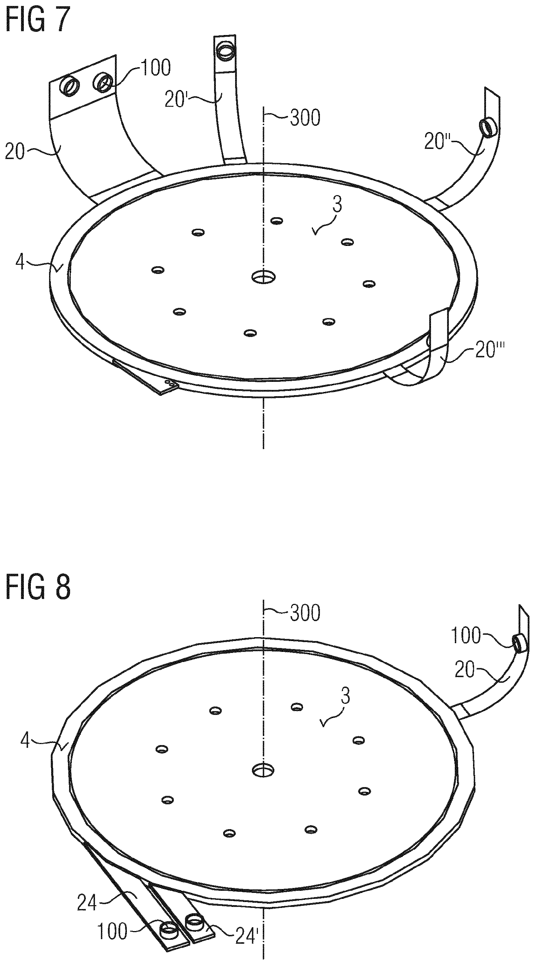

Figur 7 zeigt schematisch einen Aspekt der Vorrichtung, wobei mehrere Zuläufe 20, 20', 20", 20'" vorgesehen sind, welche Formteile 100 auf die Pufferfläche 3 speisen. Einer der Zuläufe 20 ist auch mehrspurig ausgeführt, so dass hier auch parallel mindestens zwei Formteile 100 auf die Pufferfläche 3 aufgegeben werden können. Im gezeigten Ausführungsbeispiel schließen die Zuläufe 20, 20', 20", 20'" an die Transportfläche 4 an, über welche hinweg die Formteile 100 dann auf die Pufferfläche 3 aufgegeben werden.

Figur 8 zeigt schematisch einen weiteren Aspekt der Vorrichtung, gemäß welchem auch mehrere Ausläufe 24, 24' vorgesehen sein können, welche auch mehrspurig ausgeführt sein können. So können unterschiedliche nachgeschaltete Stationen mit Formteilen 100 versorgt werden.

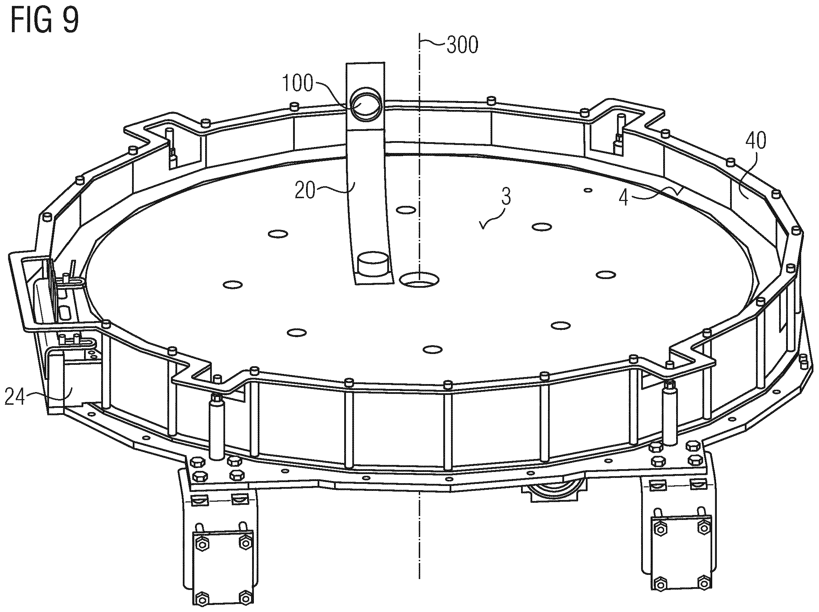

Die Figur 9 zeigt eine Puffervorrichtung bei der der Zulauf 20 direkt auf die Pufferfläche 3 mündet. Hier ist der Auslauf 20 so angeordnet, dass die Formteile 100 im Wesentlichen im Zentrum der Pufferfläche 3 aufgegeben werden und dann von dort aus nach außen wandern, um dann über die Transportfläche 4 zum Auslauf 24 zu gelangen.

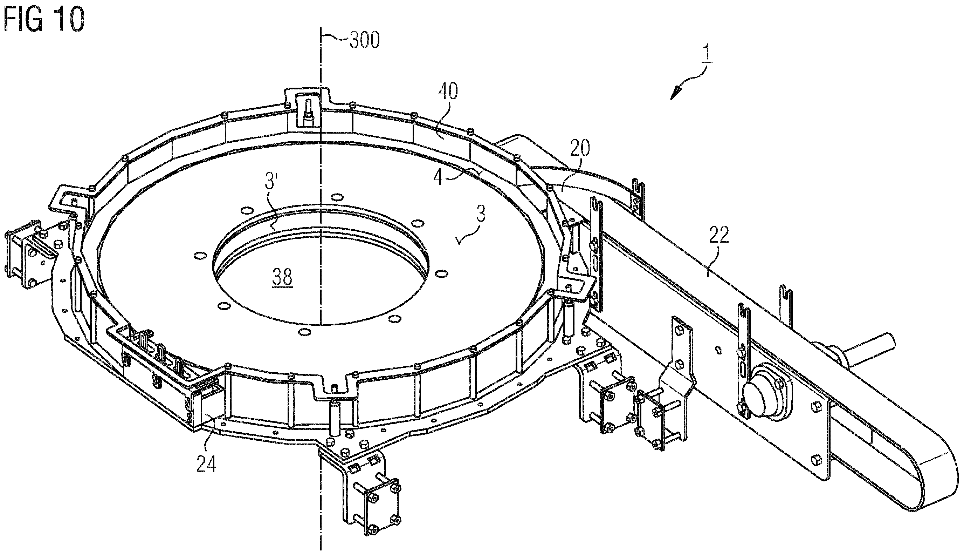

Figur 10 zeigt eine besonders bevorzugte Ausbildung der Vorrichtung 1 zum Puffern von Formteilen 100. Hier sind die übereinander angeordneten Pufferflächen 3, 3' als Pufferringe ausgebildet, welche entsprechend in ihren Zentrum eine Wartungsöffnung 38 bereitstellen. Die Pufferringe weisen dabei bevorzugt eine hier nicht gezeigte innere Begrenzung für die Formteile auf 100, um ein Herabfallen von Formteilen durch die Wartungsöffnung 38 hindurch zu vermeiden.

Durch die Wartungsöffnung 38 hindurch kann ein Bediener oder Wartungspersonal auch von unten her an die Pufferflächen 3, 3' gelangen, um dort Wartungsarbeiten vorzunehmen oder Störungen zu beseitigen. Die Wartungsöffnung 38 stellt dabei auch bei einem beengten Einbau der Vorrichtung 1 in einer Getränkeabfüllanlage einen Zugang zu den Pufferflächen 3, 3' bereit. Mit anderen Worten kann ein Bediener oder Wartungspersonal von unten durch die Wartungsöffnung 38 des Pufferrings hindurchreichen oder - je nach Dimensionierung - auch hindurch steigen, um Wartungsarbeiten oder andere Arbeiten auch an der Oberseite der Pufferfläche durchführen zu können.

Soweit anwendbar, können alle einzelnen Merkmale, die in den einzelnen Ausführungsbeispielen dargestellt sind, miteinander kombiniert und/oder ausgetauscht werden, ohne den Bereich der Ansprüche zu verlassen.

### Bezugszeichenliste

- 1: Vorrichtung zum Puffern von Formteilen
- 100: Formteil
- 20: Zulauf
- 20': Zulauf
- 20": Zulauf
- 20"': Zulauf
- 22: Transportband
- 24: Auslauf
- 24': Auslauf
- 3: rotierbare Pufferfläche
- 3': zweite rotierbare Pufferfläche
- 3": dritte rotierbare Pufferfläche
- 30: Antrieb
- 32: Seitenwand
- 34: Abweisbereich
- 36: Verbindungsfläche (Rutsche)
- 38: Wartungsöffnung
- 300: Rotationsachse
- 4: Transportfläche
- 40: Außenwand
- 5: Führungsfläche
- 50: die Pufferfläche ausbildendes Bauteil
- 52: Führungsscheibe
- 52': zweite Führungsscheibe
- 52": dritte Führungsscheibe

- d: Höhenabstand

## Patentansprüche

1. Vorrichtung (1) zum Puffern von Formteilen (100) in einer Getränkeabfüllanlage, bevorzugt zum Puffern von Behälterverschlüssen in einer Getränkeabfüllanlage, wobei die Vorrichtung einen Zulauf (20) mittels dem die Formteile (100) zugeführt werden und einen Auslauf (24) mittels dem die Formteile (100) wieder aus der Vorrichtung (1) ausgeschleust werden aufweist, zwischen denen eine Pufferfläche (3) zum Puffern der Formteile (100) angeordnet ist, wobei
die Pufferfläche (3) rotierbar angeordnet ist und an eine Transportfläche (4) anschließt, die eine direkte Verbindung zwischen dem Zulauf (20) und dem Auslauf (24) bereitstellt, zum Transportieren der Formteile (100) vom Zulauf (20) zum Auslauf (24) dient und unabhängig von der Pufferfläche (3) rotierbar ist,
**dadurch gekennzeichnet, dass**
der Zulauf (20) und der Auslauf (24) relativ zueinander auf der gleichen Höhe angeordnet und
die Pufferfläche (3) und die Transportfläche (4) waagerecht orientiert sind, wodurch ein Höhenverlust zwischen dem Zulauf der jeweiligen Formteile (100) und dem Auslauf der jeweiligen Formteile vermieden wird, wobei der Zulauf (20) und der Auslauf (24) direkt auf die Transportfläche (4) münden.

2. Vorrichtung (1) gemäß Anspruch 1, **dadurch gekennzeichnet, dass** die Pufferfläche (3) durch eine rotierbare Pufferscheibe oder einen rotierbaren Pufferring ausgebildet ist.

3. Vorrichtung (1) gemäß einem der vorstehenden Ansprüche, **dadurch gekennzeichnet, dass** die Pufferfläche (3) von der Transportfläche (4) umgeben ist, welche zum Transportieren der Formteile (100) vom Zulauf (20) zum Auslauf (24) dient, bevorzugt zum pufferfreien Transport.

4. Vorrichtung (1) gemäß Anspruch 3, **dadurch gekennzeichnet, dass** die Transportfläche (4) ringförmig ausgebildet ist und bevorzugt durch einen Transportring ausgebildet ist.

5. Vorrichtung (1) gemäß Anspruch 3 oder 4, **dadurch gekennzeichnet, dass** die Transportfläche (4) um die Rotationsachse (300) der rotierbaren Pufferfläche (3) rotierbar ist.

6. Vorrichtung (1) gemäß einem der vorstehenden Ansprüche, **dadurch gekennzeichnet, dass** mindestens zwei Zuläufe (20, 20', 20", 20"') vorgesehen sind und/oder mindestens ein Zulauf (20) mehrspurig ausgebildet ist.

7. Vorrichtung (1) gemäß einem der vorstehenden Ansprüche, **dadurch gekennzeichnet, dass** mindestens zwei Ausläufe (24, 24') vorgesehen sind und/oder mindestens ein Auslauf mehrspurig ausgebildet ist.

8. Vorrichtung (1) gemäß einem der vorstehenden Ansprüche, **dadurch gekennzeichnet, dass** mindestens zwei übereinander angeordnete Pufferflächen (3, 3', 3") vorgesehen sind, welche abwechselnd jeweils mit dem Zulauf (20) und dem Auslauf (24) verbindbar sind, wobei besonders bevorzugt der Höhenabstand (d) zwischen den übereinander angeordneten Pufferflächen (3, 3') einstellbar ist.

9. Vorrichtung (1) gemäß einem der vorstehenden Ansprüche, **dadurch gekennzeichnet, dass** mindestens zwei übereinander angeordnete Pufferflächen (3, 3') vorgesehen sind, wobei eine mit dem Zulauf (20) und eine mit dem Auslauf (24) verbunden ist, wobei die Pufferflächen bevorzugt über Verbindungsflächen miteinander verbunden sind, besonders bevorzugt über Rutschen.

10. Vorrichtung (1) gemäß einem der vorstehenden Ansprüche, **dadurch gekennzeichnet, dass** über mindestens einer Pufferfläche (3, 3', 3") eine Führungsfläche (5) so beabstandet vorgesehen ist, dass die Formteile zwischen der Pufferfläche und der Führungsfläche lagerichtig führbar sind, wobei besonders bevorzugt der Abstand zwischen einer Pufferfläche (3, 3', 3") und der jeweils zugeordneten Führungsfläche (5) auf die Geometrie des Formteils (100) einstellbar ist.

11. Verfahren zum Puffern von Formteilen (100) in einer Getränkeabfüllanlage, bevorzugt zum Puffern von Behälterverschlüssen in einer Getränkeabfüllanlage, unter Verwendung einer Vorrichtung nach einem der vorhergehenden Ansprüche, umfassend das Zuführen der Formteile (100) zur Pufferfläche (3), wobei die Pufferfläche (3) während des Zuführens der Formteile (100) rotiert wird.

12. Verfahren gemäß Anspruch 11,
**dadurch gekennzeichnet, dass** die Pufferfläche (3) zum
Abbau eines Puffers an Formteilen (100) mit einer solchen Geschwindigkeit rotiert wird, dass die Formteile (100) aufgrund der Fliehkraft nach außen gedrängt werden.

## Claims

1. Device (1) for buffering moulded parts (100) in a beverage filling plant, preferably for buffering container caps in a beverage filling plant, wherein the device comprises an inlet (20) by means of which the moulded parts (100) are supplied and an outlet (24) by means of which the moulded parts (100) are ejected out of the device (1), between which inlet and outlet a buffering surface (3) is arranged for buffering the moulded parts (100),
wherein the buffering surface (3) is arranged to be rotatable and adjoins a transport surface (4), which provides a direct connection between the inlet (20) and the outlet (24), serves for transporting the moulded parts (100) from the inlet (20) to the outlet (24) and can be rotated independently of the buffering surface (3),
**characterised in that**
the inlet (20) and the outlet (24) are arranged relative to one another at the same level and the buffering surface (3) and the transport surface (4) are oriented horizontally, whereby a loss of height between the inlet of the respective moulded parts (100) and the outlet of the respective moulded parts is avoided, wherein the inlet (20) and the outlet (24) open directly onto the transport surface (4).

2. Device (1) according to claim 1, **characterised in that** the buffering surface (3) is formed by a rotatable buffering disc or a rotatable buffering ring.

3. Device (1) according to any one of the preceding claims, **characterised in that** the buffering surface (3) is surrounded by the transport surface (4), which serves for transporting the moulded parts (100) from the inlet (20) to the outlet (24), preferably for buffer-free transport.

4. Device (1) according to claim 3, **characterised in that** the transport surface (4) is formed to be annular and is preferably in the form of a transport ring.

5. Device (1) according to claim 3 or 4, **characterised in that** the transport surface (4) can be rotated about the rotational axis (300) of the rotatable buffering surface (3).

6. Device (1) according to any one of the preceding claims, **characterised in that** at least two inlets (20, 20', 20", 20"') are provided and/or at least one inlet (20) is formed to have multiple tracks.

7. Device (1) according to any one of the preceding claims, **characterised in that** at least two outlets (24, 24') are provided and/or at least one outlet is formed to have multiple tracks.

8. Device (1) according to any one of the preceding claims, **characterised in that** at least two buffering surfaces (3, 3', 3") arranged above one another are provided, which can be connected alternately to the inlet (20) and the outlet (24) respectively, wherein particularly preferably the vertical distance (d) between the buffering surfaces (3, 3') arranged above one another can be adjusted.

9. Device (1) according to any one of the preceding claims, **characterised in that** at least two buffering surfaces (3, 3') arranged above one another are provided, wherein one is connected to the inlet (20) and one is connected to the outlet (24), wherein the buffering surfaces are preferably connected to one another by connecting surfaces, particularly preferably by means of slides.

10. Device (1) according to any one of the preceding claims, **characterised in that** over at least one buffering surface (3, 3', 3") a guiding surface (5) is provided spaced apart so that the moulded parts can be guided between the buffering surface and the guiding surface in the correct position, wherein particularly preferably the distance between a buffering surface (3, 3', 3") and the respectively assigned guiding surface (5) can be adjusted to the geometry of the moulded part (100).

11. Method for buffering moulded parts (100) in a beverage filling plant, preferably for buffering container caps in a beverage filling plant, using a device according to any one of the preceding claims, comprising supplying the moulded parts (100) to the buffering surface (3), wherein the buffering surface (3) is rotated during the supply of the moulded parts (100).

12. Method according to claim 11, **characterised in that** the buffering surface (3) is rotated for reducing a buffer of moulded parts (100) at such a speed that the moulded parts (100) are forced outwards due to centrifugal force.

## Revendications

1. Dispositif (1) de stockage des pièces moulées (100) dans une installation de remplissage de boisson, de préférence de stockage des fermetures de récipients dans une installation de remplissage de boisson, dans lequel le dispositif présente une alimentation (20) au moyen de laquelle les pièces moulées (100) sont acheminées et une décharge (24) au moyen de laquelle les pièces moulées (100) sont re-évacuées du dispositif (1), entre lesquelles est agencée une surface de stockage (3) pour stocker les pièces moulées (100), dans lequel la surface de stockage (3) est agencée à rotation et se raccorde à une surface de transport (4), qui établit une liaison directe entre l'alimentation (20) et la décharge (24), sert à transporter les pièces moulées (100) de l'alimentation (20) à la décharge (24) et peut tourner indépendamment de la surface de stockage (3),
**caractérisé en ce que**
l'alimentation (20) et la décharge (24) sont agencées à la même hauteur l'une de l'autre et la surface de stockage (3) et la surface de transport (4) sont orientées horizontalement, ce qui évite une perte de hauteur entre l'alimentation des pièces moulées respectives (100) et la décharge des pièces moulées respectives, dans lequel l'alimentation (20) et la décharge (24) débouchent directement sur la surface de transport (4).

2. Dispositif (1) selon la revendication 1, **caractérisé en ce que** la surface de stockage (3) est formée par un disque de stockage rotatif ou une bague de stockage rotative.

3. Dispositif (1) selon l'une quelconque des revendications précédentes, **caractérisé en ce que** la surface de stockage (3) est entourée par la surface de transport (4), qui sert à transporter les pièces moulées (100) de l'alimentation (20) à la décharge (24), de préférence pour le transport hors stockage.

4. Dispositif (1) selon la revendication 3, **caractérisé en ce que** la surface de transport (4) est conçue de forme annulaire et est formée de préférence par une bague de transport.

5. Dispositif (1) selon la revendication 3 ou 4, **caractérisé en ce que** la surface de transport (4) peut tourner autour de l'axe de rotation (300) de la surface de stockage rotative (3).

6. Dispositif (1) selon l'une quelconque des revendications précédentes, **caractérisé en ce qu'**il est prévu au moins deux alimentations (20, 20', 20", 20"') et/ou au moins une alimentation (20) est conçue avec plusieurs pistes.

7. Dispositif (1) selon l'une quelconque des revendications précédentes, **caractérisé en ce qu'**il est prévu au moins deux décharges (24, 24') et/ou au moins une décharge est conçue avec plusieurs pistes.

8. Dispositif (1) selon l'une quelconque des revendications précédentes, **caractérisé en ce qu'**il est prévu au moins deux surfaces de stockage (3, 3', 3") agencées l'une au-dessus de l'autre, qui peuvent être reliées en alternance respectivement à l'alimentation (20) et à la décharge (24), dans lequel, de manière particulièrement préférée, l'écart de hauteur (d) entre les surfaces de stockage (3, 3') agencées l'une au-dessus de l'autre peut être réglé.

9. Dispositif (1) selon l'une quelconque des revendications précédentes, **caractérisé en ce qu'**il est prévu au moins deux surfaces de stockage (3, 3') agencées l'une au-dessus de l'autre, dans lequel l'une est reliée à l'alimentation (20) et l'autre à la décharge (24), dans lequel les surfaces de stockage sont de préférence reliées l'une à l'autre via des surfaces de liaison, tout particulièrement par des toboggans.

10. Dispositif (1) selon l'une quelconque des revendications précédentes, **caractérisé en ce qu'**il est prévu au-dessus d'au moins une surface de stockage (3, 3', 3") une surface de guidage (5) suffisamment écartée pour que les pièces moulées puissent être guidées en position adéquate entre la surface de stockage et la surface de guidage, dans lequel, de manière particulièrement préférée, l'écart entre une surface de stockage (3, 3', 3") et la surface de guidage (5) qui lui est affectée peut être réglé sur la géométrie de la pièce moulée (100).

11. Procédé de stockage des pièces moulées (100) dans une installation de remplissage de boisson, de préférence de stockage des fermetures de récipients dans une installation de remplissage de boisson en utilisant un dispositif selon l'une quelconque des revendications précédentes, comprenant l'acheminement des pièces moulées (100) à la surface de stockage (3), dans lequel la surface de stockage (3) est entraînée en rotation pendant l'acheminement des pièces moulées (100).

12. Procédé selon la revendication 11, **caractérisé en ce que** la surface de stockage (3) est entraînée en rotation pour diminuer un stockage des pièces moulées (100) à une vitesse telle que les pièces moulées (100) soient pressées vers l'extérieur en raison de la force centrifuge.
